# EUROPÄISCHE PATENTSCHRIFT

(11) **EP 1 096 857 B1**
(45) Veröffentlichungstag und Bekanntmachung des Hinweises auf die Patenterteilung: **03.09.2003**
(21) Anmeldenummer: 99934697.6
(22) Anmeldetag: 14.07.1999
(51) Int. Cl.: A21C 13/00

(54) **EINRICHTUNG ZUR ERFASSUNG DES GÄRUNGSZUSTANDES VON TEIGLINGEN**
DEVICE FOR DETECTING THE RAISING STATE OF SMALL PILES OF DOUGH
DISPOSITIF PERMETTANT DE DETECTER L'ETAT DE LEVEE DE PETITS AMAS DE PATE

(30) Priorität: 15.07.1998 DE 19831635
(43) Veröffentlichungstag der Anmeldung: 09.05.2001
(73) Patentinhaber: Rabus, Hans-Ulrich, 42669 Västra Frölunda (SE)
(72) Erfinder: Atzinger, Thomas, 73760 Ostfildern (DE)
(74) Vertreter: Lutz, Johannes Dieter, Dr.
(86) Internationale Anmeldenummer: EP9904990
(87) Internationale Veröffentlichungsnummer: WO00003602

(56) Entgegenhaltungen:
- EP-A- 0 433 038
- EP-A- 0 477 774
- EP-A- 0 682 243
- CH-A- 135 086
- FR-A- 1 406 467
- FR-A- 2 528 175
- GB-A- 428 174
- GB-A- 1 359 161
- GB-A- 2 218 513
- GB-A- 191 419 487
- US-A- 2 147 024
- US-A- 3 322 959

## Beschreibung

Die Erfindung betrifft eine Einrichtung zur Erfassung des Gärungszustandes von Teiglingen, die in einer Gärkammer einem, z.B. durch Hefe induzierten, Gärungsprozeß unterworfen sind, in dessen Verlauf die Teiglinge eine Volumenvergrößerung erfahren. Eine Einrichtung wie im Oberbegriff von Anspruch 1 beschrieben ist aus US-A-2 147 024 bekannt.

Die typischen Bäckereiwaren wie Brot oder Tafelbrötchen, die täglich in Filialen von Bäckereibetrieben in großen Stückzahlen verkauft werden, werden, um einer Nachfrage nach möglichst frischer Qualität gerecht werden zu können, in den jeweiligen Filialbetrieben gebakken, wodurch auch eine flexible Anpassung der produzierten Menge an die jeweilige Nachfrage erreicht werden soll. Hierbei wird, z.B. bei der Produktion von Tafelbrötchen, von Teiglingen ausgegangen, die auf einer Brötchenanlage in großer Zahl mit im wesentlichem identischem Gewicht und Volumen vorgefertigt werden. Diese Teiglinge, die schon bei ihrer Herstellung mit Hefe versetzt werden, werden, bevor die Brötchen in einem Backofen gebacken werden können, in einem Gärschrank einem Gärprozeß ausgesetzt, durch den die für das Bakken der Brötchen geeignete Größe und Teig-Konsistenz erzielt wird. Hierbei wird der Gärprozeß durch Vorgabe der Kammertemperatur und gegebenenfalls ihres zeitlichen Verlaufs so geführt, daß bei einer Gesamt-Gärungszeit von ca. 20 Minuten die erforderliche Teigling-Größe erreicht wird, die in typischen Fällen dem 5-fachen des Volumens der frischen, auf der Brötchenanlage herstellten "grünen "Teiglinge entspricht, bevor in diesen durch Erhöhung der Temperatur der relativ rasch ablaufende Gärprozeß in Gang gesetzt wird, nach dessen Ablauf, d.h. sobald die Teiglinge die erforderliche Größe erreicht haben, diese sofort gebacken werden sollten, um Tafelbrötchen definierter erwünschter Qualität zu erzielen. Wichtigstes Qualitätsmerkmal der fertiggebackenen Brötchen, mit dem ein Käufer auch geschmackliche Qualitätsvorstellungen verbindet, ist deren Größe, die bei den jeweiligen Brötchensorten auch einheitlich sein sollte.

Um diese Einheitlichkeit zu erreichen, erscheint grundsätzlich eine stets gleichartige Führung des Gärprozesses geeignet, z.B. durch eine programmgesteuerte zeitliche Führung der Gärkammer-Temperatur, kombiniert mit einer Anzeige dafür, daß der Gärprozeß nach Ablauf der sich durch die Temperaturführung ergebenden Gärzeit abgeschlossen ist. Durch eine solche Temperaturführung lassen sich jedoch nicht Einflüsse auf die Größe der gereiften Teiglinge ausschließen, die aus unterschiedlichen Hefe-Qualitäten und/oder Unterschieden der Einsatztemperaturen der grünen Teiglinge resultieren und zu signifikanten Größenvariationen der gereiften Teiglinge führen können. Es ist daher auch bei einer einheitlich zeitgesteuerten Gärung der Teiglinge erforderlich, die in der Gärkammer behandelten Teiglinge einer visuellen Qualitätskontrolle zu unterziehen, bevor sie in den Backofen gebracht werden können, die jedoch ein hohes Maß an praktischer Erfahrung voraussetzt, insbesondere dahingehend, wie im Bedarfsfall ein Gärprozeß bis zur geeigneten Reife der Teiglinge fortzusetzen ist. Die in der Filiale beschäftigten Verkaufspersonen, die gleichsam nur nebenbei auch mit dem Backen betraut sind, haben die diesbezüglich erforderliche Erfahrung in aller Regel nicht. Dies hat zur Folge, daß oftmals erst anhand der fertig gebackenen Tafelbrötchen erkennbar ist, ob diese den geforderten Qualitätsmerkmalen genügen oder nicht.

Aufgabe der Erfindung ist es daher, eine Einrichtung der Eingangs genannten Art anzugeben, durch die eine zuverlässige, objektive Erfassung desjenigen Gärungszustandes von Teiglingen möglich ist, dem ihre Sollgröße entspricht.

Diese Aufgabe wird erfindungsgemäß dadurch gelöst, daß ein mindestens einem der in der Gärkammer angeordneten Teiglinge zugeordneter, nach einem berührungslos arbeitenden Meßprinzip konzipierter Abstands-Sensor vorgesehen ist, der mindestens dann, wenn die Dicke des Teiglings einen vorgegebenen Sollwert erreicht, mit dem der erwünschte Reifungsgrad des Teiglings verknüpft ist, ein hierfür charakteristisches Anzeigesignal erzeugt.

Bei der erfindungsgemäßen Einrichtung wird ausgenutzt, daß die Volumenvergrößerung, die ein Teigling durch die Gärung erfährt, von seinem Mittelpunkt aus gesehen in jeder Richtung zu einer Dimensionsvergrößerung führt, so daß durch eine Messung des Abstandes eines Oberflächenpunktes oder -bereiches des Teiglings von dem Ort, an dem sich der Sensor befindet, eine sehr zuverlässige Erfassung des Volumens des Teiglings bzw. seines Gärungs-Reifegrades möglich ist. Aus einer absoluten Messung des Anfangsabstandes, als Referenzwert, und der fortlaufenden Messung der Verringerung dieses Abstandes ist das Volumen des Teiglings hinreichend genau bestimmbar, so daß sich aus einer solchen Abstandsmessung auch eine hinreichend präzise Aussage über den Reifungsgrad des Teiglings gewinnen läßt.

Durch die Erfindung wird somit auf eine einfache Weise eine objektive Beurteilung des Reifungsgrades des überwachten Teiglings und damit auch desjenigen der mit diesem Teigling identischen weiteren Teiglinge ermöglicht. Die erfindungsgemäße Einrichtung vermittelt gleichsam eine selbsttätige Verlaufskontrolle des Gärungsprozesses und erlaubt es gegebenenfalls auch, in Abhängigkeit vom momentan erfaßten Volumen der Teiglinge, den Gärungsprozeß durch Beeinflussung der Gärkammer-Temperatur so zu steuern, daß der für den nachfolgenden Backvorgang erforderliche Reifungsgrad der Teiglinge nach Ablauf einer bestimmten Zeitspanne erreicht wird. Die erfindungsgemäße Einrichtung ist geeignet, Fehlbeurteilungen des Reifungsgrades der Teiglinge zu vermeiden und damit die rationelle Produktion von Backwaren in einem Filial-Betrieb zu ermöglichen.

Der Abstandssensor ist dahingehend angeordnet und ausgelegt, daß er über dem zentralen Bereich des Teiglings die von der Auflage aus gemessene Höhe desselben erfaßt, die als Meßgröße deshalb zweckmäßig ist, weil sie gegenüber einem fest vorgegebenen Referenzwert, nämlich dem durch die Konstruktion der Gärkammer vorgegebenen Abstand der Auflage der Teiglinge von dem Abstandssensor, ermittelbar ist. Es kommt hinzu, daß sich die vertikale Dicke eines Teiglings während des Gärprozesses, selbst wenn diese geringer sein sollte als dessen größter horizontaler Durchmesser, um einen größeren Betrag ändern wird als der durch eine "horizontale" Abstandsmessung allenfalls erfaßbare Wert des horizontalen Radius des Teiglings, da die vertikale Dickenänderung sich aus der Summe der Abstandsveränderung des Mittelpunktes des Teiglings von der Unterlage und der Änderung des vertikalen Abstandes der Teiglingoberfläche vom Mittelpunkt des Teiglings ergibt.

Der Entfernungssensor ist als Ultraschall-Sensor ausgebildet, der nach dem Prinzip der Laufzeitmessung von Ultraschall-Signalen arbeitet. Ein derartiger Entfernungssensor hat einen nur kleinen Raumbedarf und kann ohne weiteres zwischen zwei Auflageböden für Teiglinge innerhalb einer Gärkammer so installiert werden, daß unterhalb des Sensors noch genügend Raum für den überwachten Teigling bleibt.

Der Entfernungssensor ist an einem in eine üblichen Gärkammer einsetzbaren, auf einem Bodenblech derselben aufsetzbaren Gestell angeordnet vorzugsweise einem Dreibeingestell, und ist insoweit auch als Nachrüstsatz für schon vorhandene Gärschränke geeignet.

Weitere Einzelheiten der erfindungsgemäßen Einrichtung ergeben sich aus der nach folgenden Beschreibung von Ausführungsbeispielen derselben anhand der Zeichnung.

Es zeigen:
- Fig. 1: eine schematisch vereinfachte Schnittdarstellung eines Gärschrankes, der mit einer erfindungsgemäßen Abstands-Meßeinrichtung ausgerüstet ist;
- Fig. 2a und 2b: einen zur Verwendung in dem Gärschrank gemäß Fig. 1 geeigneten Ultraschall-Abstandssensor

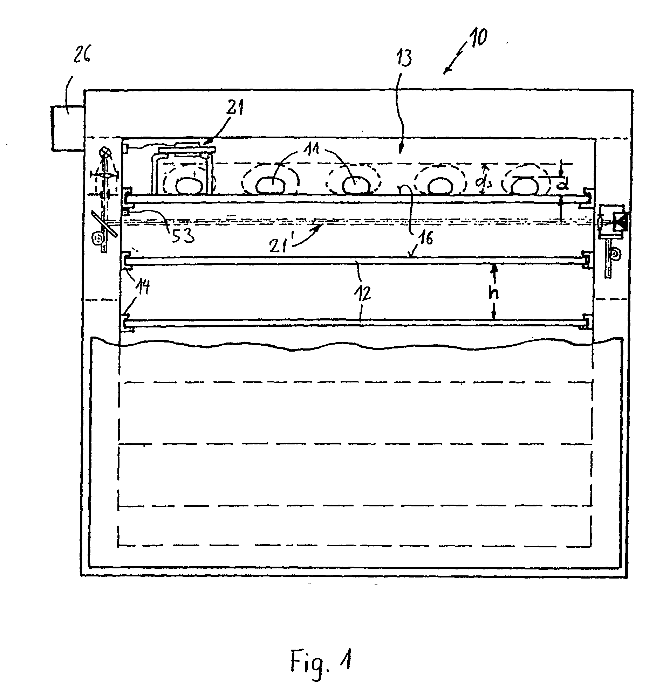

In dem in der Fig. 1 insgesamt mit 10 bezeichneten Gärschrank sind Teiglinge 11, z.B. für Tafelbrötchen, einem Gärprozeß aussetzbar, bevor sie in einem nicht dargestellten Backofen, unmittelbar nach Abschluß des Gärprozesses, fertiggebacken werden.

Durch diesen Gärprozeß sollen die Teiglinge 11, die durch den Gärprozeß eine erhebliche Volumenvergrößerung erfahren, auf die für das Backen. geeignete Konsistenz des Teiges gebracht werden, was noch einmal zu einer zusätzlichen Volumenvergrößerung auf die endgültige Größe der fertigen Brötchen führt.

Hierbei liegen die Teiglinge 11 auf Bodenblechen 12 auf, die zum bequemen Einbringen der Teiglinge in die Gärkammer 13 des Gärschrankes und zu deren Entnahme in seitlichen Führungsschienen 14 leichtgängig verschiebbar sind. Diese Bodenbleche 12, die eine etwa quadratische Auflagefläche 16 haben sind jeweils in gleichem lichtem Abstand h voneinander angeordnet, der zum Zweck der Erläuterung zu ca. 70 mm angenommmen sei, wobei davon ausgegangen ist, daß die durch den Gärprozeß zu erreichende vertikale Soll-Dicke dₛ der Teiglinge 11 einen Wert um 50 mm haben soll. Bei der zur Erläuterung des Gärschrankes 10 angenommenen Gestaltung desselben sind 6 Bodenbleche 12 vorhanden, auf die Chargen von jeweils 25 Teiglingen 11 aufgelegt werden können.

Der Gärschrank 10 ist mittels einer nicht dargestellten Luft-Umlauf-Heizeinrichtung versehen, mittels derer die in der Gärkammer 13 herrschende Temperatur einstellbar und, entsprechend einem produktbezogenen günstigen Temperaturverlauf, durch den der Gärprozeß steuerbar ist, veränderbar ist, wobei verschiedene Temperaturverläufe vorgewählt und programmgesteuert ablaufen können.

Zur Überwachung des Gärungsprozesses, der zu einer Volumenvergrößerung der Teiglinge führt, ist ein insgesamt mit 21 bezeichneter Abstandssensor vorgesehen, mittels dessen, im Ergebnis, die vertikale Dicke d im zentralen Bereich eines ausgewählten Teiglings 11 erfaßbar ist, die als Kriterium für den Reifungsgrad der dem Gärungsprozeß unterworfenen Teiglinge 11 überwacht wird. Sobald der Teigling 11 die vorgegebene Soll-Dicke dₛ erreicht hat, erzeugt der Abstandssensor 21 ein hierfür charakteristisches, elektrisches Ausgangssignal, das zum einen als Anzeigesignal dafür dient, daß die Teiglinge ihren backfähigen Zustand erreicht haben und zum anderen auch als Steuersignal zur Temperaturerniedrigung in der Gärkammer 13 nutzbar ist, um den Gärvorgang zu stoppen.

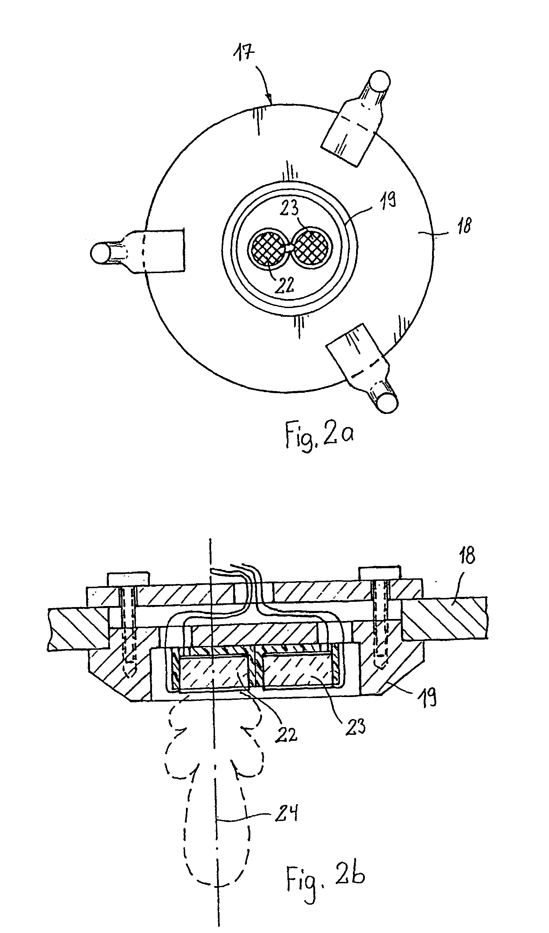

Dieser Abstandssensor 21, zu dessen Erläuterung nunmehr auch auf die Fig. 2a und 2b Bezug genommen sei, ist als Ultraschall-Sensor ausgebildet, der an einem, in der Art eines dreibeinigen Rundtisches ausgebildeten Traggestell 17 im zentralen Bereich der "Tisch-Platte" 18 anmontiert ist. Der Ultraschall-Sensor umfaßt einen in einer flachen Dose 19, die in eine zentrale Bohrung der Tischplatte 18 angesetzt ist, angeordneten Ultraschallsender 22 und einen in dessen unmittelbarer Nähe angeordneten Ultraschallempfänger 23, wobei der Ultraschall sender 22 so ausgebildet und angeordnet ist, daß die zentrale Achse 24 seines keulenförmigen, in der Fig. 2b gestrichelt angedeuteten Strahlungsfeldes senkrecht nach unten gerichtet ist, wenn der Abstandssensor 21 mit seinem Dreibein-Gestell 17 auf das den überwachten Teigling 11 tragende Bodenblech 12 aufgesetzt ist. Der Empfänger 23 ist so ausgebildet und angeordnet. daß er außer am Boden oder an einem unterhalb des Senders 22 angeordneten Teigling 11 reflektierter Ultraschallstrahlung auch einen kleinen Teil seitlich vom Sender abgestrahlter "direkter" Ultraschallstrahlung empfangen kann, so daß eine Messung des Abstandes eines zentralen Bereiches der Oberfläche des Teiglings 11 vom Ultraschallsender 22 und damit, bei bekanntem Abstand des Ultraschallsenders 22 von der Aufstandsfläche 16 seines Gestells 17, auch der Dicke des Teiglings 11 in der folgenden Weise möglich ist:

Wird der Sender 22 zur Abstrahlung von Ultraschall angesteuert, so tritt unmittelbar danach aufgrund der "auf kurzem Weg" empfangenen Direktstrahlung, die seitlich abgestrahlt wird, ein Ausgangssignal des Empfängers 23 auf, das die Aktivierung eines nicht dargestellten Zeitimpulszählers auslöst, der die Anzahl von z.B. mit einer Frequenz von 1MHz erzeugten Zählimpulse zählt, bis durch den Empfang am Meßobjekt, dem Teigling 11, reflektierter Ultraschallstrahlung ein Ausgangssignal höheren Pegels des Empfängers auftritt, mit dessen Einsetzen die Zeitimpuls-Zählung beendet wird. Der Zählerstand des Zeitzählers ist dann ein sehr genaues Maß für die Laufzeit der Ultraschallstrahlung vom Sender 22 zum Teigling 11 und von diesem zum Empfänger 23 und ist in einer den Meßbetrieb steuernden, lediglich schematisch angedeuteten elektronischen Steuereinheit 26 in Einheiten der Dicke d des Teiglings auswertbar. In diesem Betriebsmodus des Abstandssensors 21, der durch eine Referenzmessung ohne Teigling 11 d.h. Messung des Abstandes des Sensors 21 von der Boden-Aufstandsfläche 16 auf einfache Weise geeicht werden kann, ist eine Messung der Dicke des Teiglings mit einer Genauigkeit von 0,3 bis 0,5 mm ohne weiteres möglich, die für die Überwachung der Teigling-Dicke ausreichend ist. Durch eine zeitliche Wiederholung solcher Meßzyklen, z.B. in Zeitabständen von 10 bis 20 s ist auch eine quasi-kontinuierliche Verfolgung des Gärprozesses möglich, so daß nach Maßgabe fortlaufend erfaßter Werte der Dicke des Teiglings 11 die Prozeß-Steuerung mittels der elektronischen Steuereinheit 26 auch dahingehend beeinflußt - "korrigiert" - werden kann, z.B. durch Temperaturänderung in der Gärkammer 13, daß der Gärprozeß mit Ablauf einer definierten Prozeßdauer zum erwünschten Reifegrad der Teiglinge 11 insgesamt führt.

Der insoweit erläuterte, in den Gärschrank 10 einsetzbare Abstandssensor 21 eignet sich insbesondere zu einer Nachrüstung vorhandener Gärschränke, an denen lediglich elektrische Durchführungen für die Stromversorgung des Abstandssensors und für die Signal-Ausleitung zu der elektronischen Steuereinheit 26 vorgesehen werden müssen.

## Patentansprüche

1. Einrichtung zur Erfassung des Gärungszustandes von Teiglingen (11), die in einer Gärkammer (13) einem, z.B. durch Hefe induzierten, Gärunsprozeß unterworfen sind, in dessen Verlauf die Teiglinge eine Volumenvergrößerung erfahren, wobei ein mindestens einem der in der Gärkammer (13) angeordneten Teiglinge (11) zugeordneter Abstandssensor (21) vorgesehen ist, der mindestens dann, wenn die Dikke des Teiglings (11) einen vorgegebenen Soll-Wert(ds)erreicht, der mit einem erwünschten Reifunsgrad des Teiglings verknüft ist, ein hierfür charakteristisches Ausgangssignal erzeugt, und wobei der Abstandssensor (21) dahingehend gestaltet und/oder angeordnet ist, daß er die von einer Auflagefläche (16) aus gemessene Höhe(d)des Teiglings (11) erfaßt, **dadurch gekennzeichnet, daß** der Abstandssensor (21) als Ultraschall-Sensor ausgebildet ist, der nach dem Prinzip der Laufzeitmessung von Ultraschall-Signalen arbeitet, und daß der Abstandssensor (21) an einem in die Gärkammer (13) einsetzbaren, auf einem Bodenblech (12) der Kammer (13) aufsetzbaren Gestell (17) angeordnet ist

2. Einrichtung nach Anspruch 1, **dadurch gekennzeichnet, daß** das Gestell (17) als Dreibein-Gestell ausgebildet ist

## Claims

1. Device for detecting the proofing condition of dough lumps (11), which are subjected to a proofing process in a proofing chamber (13), induced for example by yeast, in the course of which the dough lumps experience an increase in volume, wherein a distance sensor (21) is associated with at least one of the dough lumps (11) provided in the proofing chamber (13), which, at least when the thickness of the dough lump (11) achieves a pre-determined intended value dₛ, which is correlated with a desired degree of ripeness of the dough lump, produces a therefore characteristic output signal, and wherein the distance sensor (21) is designed and/or arranged such that it detects the height d of the dough lump (11) above a support surface (16), thereby **characterized, that** the distance sensor is an ultrasonic sensor, which operates on the principle of the travel time lapse of ultrasonic signals, and that the distance sensor (21) is provided on a framework (17) employable in the proofing chamber (13), which can be placed on the proofing sheet (12) in the chamber (13).

2. Device according to claim 1, thereby **characterized, that** the framework (17) is a three-legged framework.

## Revendications

1. Dispositif permettant de détecter le stade de fermentation de pâtons (11) qui sont soumis dans une chambre de fermentation (13) à un processus de fermentation par exemple induit par de la levure, au cours duquel les pâtons augmentent de volume, sachant qu'est prévu un capteur d'éloignement (21) associé à au moins l'un des pâtons (11) placés dans la chambre de fermentation (13), qui produit un signal de sortie caractéristique au moins lorsque l'épaisseur du pâton (11) atteint une valeur de consigne prédéfinie (dₛ) qui correspond à un degré de maturité souhaité du pâton, et sachant que le capteur d'éloignement (21) est conçu et/ou disposé de telle manière qu'il relève une hauteur (d) du pâton (11) mesurée depuis une surface de support (16), **caractérisé en ce que** le capteur d'éloignement (21) est un détecteur d'ultrasons qui fonctionne suivant le principe de la mesure du temps de transit de signaux ultrasonores, et **en ce que** le capteur d'éloignement (21) est placé sur un support (17) pouvant être introduit dans la chambre de fermentation (13) et pouvant être posé sur une tôle (12) de la chambre (13).

2. Dispositif selon la revendication 1, **caractérisé en ce que** le support (17) est réalisé sous forme de trépied.
